# EUROPEAN PATENT SPECIFICATION

(11) **EP 3 474 652 B1**
(45) Date of publication and mention of the grant of the patent: **23.08.2023**
(21) Application number: 17818779.5
(22) Date of filing: 27.06.2017
(51) Int. Cl.: A01M 7/00, A01B 15/12, A01B 23/04, A01B 63/24, B60G 3/01, B60G 11/27

(54) **RETROFIT FOR FARM EQUIPMENT**
NACHRÜSTUNG FÜR LANDWIRTSCHAFTLICHE AUSRÜSTUNG
RÉNOVATION POUR ÉQUIPEMENT AGRICOLE

(30) Priority: 27.06.2016 US 201662355080 P
(43) Date of publication of application: 01.05.2019
(73) Proprietor: Simon, Steve N.G., Rodney, Ontario N0L 2C0 (CA)
(72) Inventor: Simon, Steve N.G., Rodney, Ontario N0L 2C0 (CA)
(74) Representative: Ström & Gulliksson AB
(86) International application number: PCT/CA2017/050780
(87) International publication number: WO 2018/000090

(56) References cited:
- FR-A1- 3 028 458
- US-B2- 9 259 986
- US-B2- 9 259 986

## Description

### TECHNICAL FIELD

The present invention relates to farm equipment. More specifically, the present invention relates to the retrofitting of farm equipment to result in more useful equipment. In particular, the present invention relates to a method of modifying a suspension system of a sprayer.

### BACKGROUND

Advances in farming equipment have increased their efficiency, productivity, and have lowered their prices. Such advances have allowed farmers to accomplish more with the various forms of farm machinery. However, farm machinery built for one type of crop may not be suitable for other types of crops. As an example, one type of crop may require farm machinery to have a certain minimum ground clearance while other types of crops may require a different ground clearance.

The above is true for, among other types of farm machinery, sprayers. Some types of crops require sprayers to be above the resulting crops while others need to have the sprayers closer to the ground. Unfortunately, most farm equipment, including sprayers, do not have configurable ground clearances. This deficiency has led to farmers needing to purchase different farm equipment for different crops, with a corresponding increase in the costs of planting different crops.

In US 9259986 B2, an assembly for supporting a vehicle chassis on a wheel of the vehicle is presented. It includes a frame pivotably connected to the vehicle chassis at a connection location and a wheel attachment component configured to pivot in unison with the frame and to move between a plurality of operating positions relative to the frame. An adjustment actuator is rigidly coupled with the frame and is configured to shift the attachment component between any of the plurality of operating positions relative to the frame. In FR 3028458 A1, a method for supplying hydraulic fluid to a hydraulic motor of a driving wheel supporting a vehicle by means of a jack suspension is presented.

There is therefore a need for systems, methods, or devices that will allow for a retrofit of existing farm equipment to allow such equipment to be used for different crops of different heights.

### SUMMARY

The present invention provides a method relating to the replacement of specific parts in farm equipment to thereby adjust the farm equipment's capabilities. In particular, to modify the ground clearance of farm equipment, especially sprayers with a strut type suspension, the spindles of the suspension system along with the air spring absorber are replaced. The original spindles are replaced with longer spindles while the air spring absorber is replaced with one that allows for an increased range of travel. As well, the fixed linkage arms that connect the air height control valves to the suspension system are also replaced with longer arms. These longer linkage arms are of an adjustable length.

In a first aspect, the present invention provides a method modifying a suspension system on a sprayer to alter a ground clearance of the sprayer, the method comprising:
- locating at least one original spindle installed on said sprayer, said at least one original spindle being installed on a strut-type suspension system of said sprayer;
- removing said at least one original spindle;
- selecting a replacement spindle from a group of spindles longer than said at least one original spindle, said replacement spindle having a length determined by a user of said sprayer dictated by the height of a crop upon which said sprayer is used;
- replacing said at least one original spindle with at least one said replacement spindle such that said sprayer is elevated sufficiently for said sprayer to service said crop;
- locating at least one original air spring mechanism installed on said sprayer;
- replacing said at least one air original spring mechanism with at least one replacement air spring mechanism, said at least one replacement spring mechanism allowing for an increased range of travel of said strut-type suspension system than said at least one original air spring mechanism;
- locating at least one original linkage arm installed on said sprayer, said linkage arm linking an automatic air height control valve assembly to said air spring in said suspension system, and
- replacing said at least one original linkage arm with at least one replacement linkage arm, said at least one replacement linkage arm being longer than said at least one original linkage arm and having an adjustable length.

### BRIEF DESCRIPTION OF THE DRAWINGS

The embodiments of the present invention will now be described by reference to the following figures, in which identical reference numerals in different figures indicate identical elements and in which:
**FIGURE 1** is an exploded view of a strut-type suspension system for farm equipment; and
**FIGURE 2** is an exploded view of an automatic air hose assembly for farm equipment.

### DETAILED DESCRIPTION

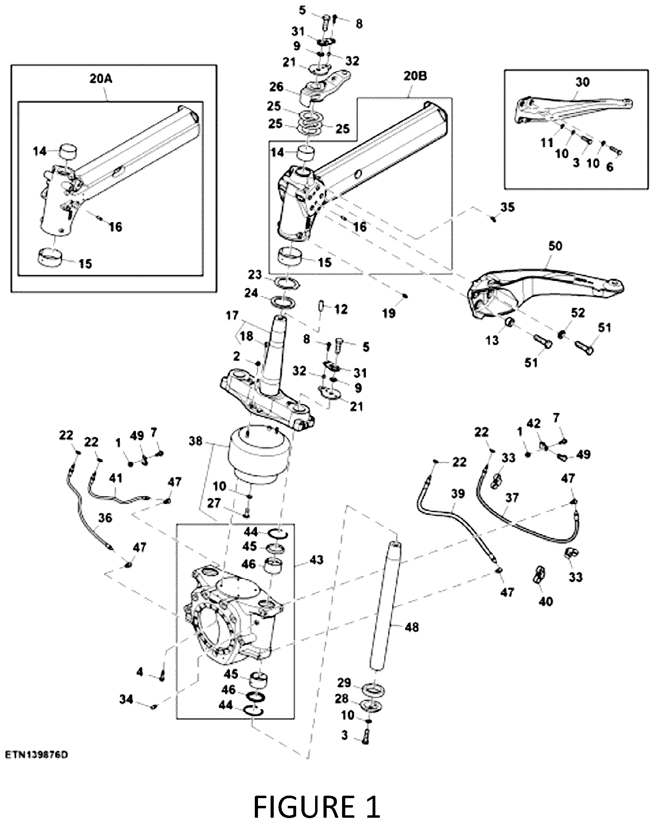

Referring to Figure 1, an exploded view of a right hand side strut suspension system for a self-propelled sprayer is illustrated. As can be seen, a spindle 48 is illustrated. However, a matching spindle is not illustrated but is also present in the system. To adjust the clearance height of the self-propelled sprayer, both original spindles are to be replaced with longer spindles. The length of the replacement spindles, and thus the final adjusted height of the sprayer, may be controlled by a travel limiting device such as a spacer, bumper, or stop on or near the replacement spindle. Since the replacement spindle would be one component that controls the distance allowed for the suspension system to move up and down, a suitable device that limits the travel of the suspension system, such as a spacer or a bumper, can be used to limit how far this distance is.

Also to be replaced is the original air spring 38. This air spring 38, also known as an absorber or a spring mechanism, is to be replaced with an air spring or absorber that allows for greater or further travel than the original air spring. As with the spindles, a travel limiting device, such as a suitable bumper or spacer or stop, can also be used to control how far the suspension system travels or moves up and down. Installing a suitable spacer or bumper can limit the amount of travel that the suspension system can undergo.

It should be clear that Figure 1 illustrates only one strut suspension assembly. A corresponding left hand side suspension assembly would also need to have its spindles replaced along with the corresponding absorber.

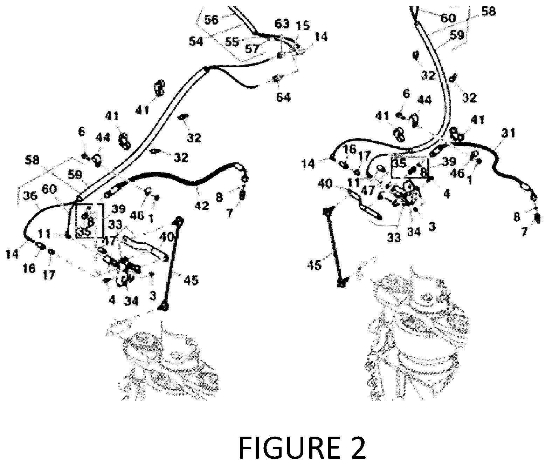

In addition to the above components, the original linkage arms that link the automatic air height control valve assembly to the air spring in the suspension system must also be replaced with longer linkage arms. Referring to Figure 2, an exploded view of the automatic air height control valve assembly is illustrated. The original linkage arms 45 in the figure are clearly illustrated and these would need to be replaced. It should be noted that current designs of sprayers use fixed length linkage arms. However, these linkage arms can be replaced with other fixed length linkage arms or adjustable linkage arms. As well, adjustable replacement linkage arms can be mechanical, pneumatic, or electrical type linkage arms. Depending on the configuration, these adjustable replacement linkage arms may be extended or shortened from within the driver's cab of the sprayer. Similarly, the adjustable replacement linkage arms may be adjusted from outside the driver's cab. In one implementation, each linkage arm was replaced by a linear actuator. Depending on the implementation and the configuration of the linkage arms, custom brackets may need to be used to attach the replacement linkage arm to the points where the original linkage arms were attached. As noted previously, linear actuators may be used as replacement linkage arms. Using linear actuators would allow for better control of the length of the replacement linkage arm.

To retrofit a single self-propelled sprayer, each corner or wheel or strut type suspension of the sprayer would need to have its original linkage arm, spindles, and absorber replaced. As, each wheel would need two replacement spindles, one replacement linkage arm, and one replacement absorber. A single sprayer would thus need eight replacement spindles, four replacement linkage arms, and four replacement absorbers.

Of course, the replacement spindles, air spring/absorbers, and linkage arms will need to be at least as sturdy as the original parts.

The components needed to replace the relevant parts noted above can be assembled as a kit with a suitable set of instructions. Accordingly, such a kit would have eight replacement spindles, four replacement air springs, and four replacement linkage arms.

It should also be noted that while the above description and the accompanying figures applies to self-propelled sprayers, other farm equipment may also be retrofitted or adjusted in a similar manner. Any farm equipment that uses a strut type suspension system can have its ground clearance adjusted by locating the spindles that control the distance that the suspension system travels as well as the "shock absorbers" or spring mechanisms that also control the distance that the suspension system travels, and replacing these components. The spindles would be replaced by longer spindles while the spring mechanisms would be replaced by similar spring mechanisms that allow a greater travel distance. Other components that would be affected by the greater travel of the suspension systems would, of course, also need to be replaced to take into account this greater travel distance. One such component affected by the greater travel would be the linkage arm noted above.

Regarding implementation, experiments have shown that John Deere self-propelled sprayers models R4030, R4038, and R4045 are suitable for use with the invention. For these models of sprayers, the spindle (John Deere part number KK26139), the air spring or absorber (John Deere part number AKK12461), and the linkage arm (John Deere part number AN403729) would need to be replaced.

A person understanding this invention may now conceive of alternative structures and embodiments or variations of the above. The scope of the invention is defined in the claims that follow.

## Claims

1. A method for modifying a suspension system on a sprayer to alter a ground clearance of the sprayer, the method comprising:
- locating at least one original spindle (48) installed on said sprayer, said at least one original spindle (48) being installed on a strut-type suspension system of said sprayer;
- removing said at least one original spindle (48);
- selecting a replacement spindle from a group of spindles longer than said at least one original spindle, said replacement spindle having a length determined by a user of said sprayer dictated by a crop height upon which said sprayer is used;
- replacing said at least one original spindle (48) with at least one said replacement spindle such that said sprayer is elevated sufficiently for said sprayer to service said crop;
- locating at least one original air spring mechanism (38) installed on said sprayer;
- replacing said at least one original air spring mechanism (38) with at least one replacement air spring mechanism, said at least one replacement air spring mechanism allowing for an increased range of travel of said strut-type suspension system than a range allowed by said at least one original air spring mechanism;
- locating at least one original linkage arm (45) installed on said sprayer, said linkage arm linking an automatic air height control valve assembly to said air spring in said suspension system, and;
- replacing said at least one original linkage arm (45) with at least one replacement linkage arm, said at least one replacement linkage arm being longer than said at least one original linkage arm and having an adjustable length.

## Patentansprüche

1. Verfahren zum Modifizieren eines Aufhängungssystems auf einem Sprüher, um eine Bodenfreiheit des Sprühers zu verändern, wobei das Verfahren umfasst:
- Lokalisieren mindestens einer auf dem Sprüher installierten Originalspindel (48), wobei die mindestens eine Originalspindel (48) auf einem strebenartigen Aufhängungssystem des Sprühers installiert ist;
- Entfernen der mindestens einen Originalspindel (48);
- Auswählen einer Ersatzspindel aus einer Gruppe von Spindeln, die länger als die mindestens eine Originalspindel sind, wobei die Ersatzspindel eine Länge aufweist, die von einem Benutzer des Sprühers festgelegt wird, bestimmt von einer Erntehöhe, auf welcher der Sprüher verwendet wird;
- Ersetzen der mindestens einen Originalspindel (48) durch die mindestens eine Ersatzspindel, so dass der Sprüher ausreichend zum Bedienen der Ernte für den Sprüher angehoben ist;
- Lokalisieren mindestens eines auf dem Sprüher installierten Originalluftfedermechanismus (38);
- Ersetzen des mindestens einen Originalluftfedermechanismus (38) durch mindestens einen Ersatzluftfedermechanismus, wobei der mindestens eine Ersatzluftfedermechanismus einen größeren Bewegungsbereich des strebenartigen Aufhängungssystem als ein Bereich erlaubt, der durch den mindestens einen Originalluftfedermechanismus erlaubt ist;
- Lokalisieren mindestens eines auf dem Sprüher installierten Originalverbindungsarms (45), wobei der Originalverbindungsarm eine automatische Lufthöhenregelventilanordnung mit der Luftfeder in dem Aufhängungssystem verbindet, und;
- Ersetzen des mindestens einen Originalverbindungsarms (45) mit mindestens einem Ersatzverbindungsarm, wobei der Ersatzverbindungsarm länger als der mindestens eine Originalverbindungsarm ist und eine verstellbare Länge aufweist.

## Revendications

1. Procédé de modification d'un système de suspension sur un pulvérisateur pour changer une garde au sol du pulvérisateur, le procédé comprenant :
- la localisation d'au moins une broche d'origine (48) installée sur ledit pulvérisateur, ladite au moins une broche d'origine (48) étant installée sur un système de suspension de type à montant dudit pulvérisateur ;
- le retrait de ladite au moins une broche d'origine (48) ;
- la sélection d'une broche de remplacement provenant d'un groupe de broches plus longues que ladite au moins une broche d'origine, ladite broche de remplacement ayant une longueur déterminée par un utilisateur dudit pulvérisateur en fonction d'un volume de récolte sur lequel ledit pulvérisateur est utilisé ;
- le remplacement de ladite au moins une broche d'origine (48) par ladite au moins une broche de remplacement de sorte que ledit pulvérisateur soit suffisamment élevé pour que ledit pulvérisateur puisse desservir ladite récolte ;
- la localisation d'au moins un mécanisme de ressort pneumatique d'origine (38) installé sur ledit pulvérisateur ;
- le remplacement dudit au moins un mécanisme de ressort pneumatique d'origine (38) par au moins un mécanisme de ressort pneumatique de remplacement, ledit au moins un mécanisme de ressort pneumatique de remplacement permettant d'augmenter une plage de déplacement dudit système de suspension de type à montant par rapport à une plage permise par ledit au moins un mécanisme de ressort pneumatique d'origine ;
- la localisation d'au moins un bras de liaison d'origine (45) installé sur ledit pulvérisateur, ledit bras de liaison reliant un ensemble clapet de régulation automatique de hauteur d'air audit ressort pneumatique dans ledit système de suspension, et ;
- le remplacement dudit au moins un bras de liaison d'origine (45) par au moins un bras de liaison de remplacement, ledit au moins un bras de liaison de remplacement étant plus long que ledit au moins un bras de liaison d'origine et ayant une longueur réglable.
